# EUROPÄISCHE PATENTSCHRIFT

(11) **EP 2 458 345 B1**
(45) Veröffentlichungstag und Bekanntmachung des Hinweises auf die Patenterteilung: **23.09.2020**
(21) Anmeldenummer: 10192661.6
(22) Anmeldetag: 26.11.2010
(51) Int. Cl.: G01F 13/00, G01G 13/02, G01G 17/06

(54) **Dosiersystem**
Dosing system
Système de dosage

(43) Veröffentlichungstag der Anmeldung: 30.05.2012
(73) Patentinhaber: Mettler-Toledo GmbH, 8606 Greifensee (CH)
(72) Erfinder: Lüchinger, Paul, 8610, Uster (CH)
(74) Vertreter: Mettler-Toledo

(56) Entgegenhaltungen:
- EP-A1- 1 959 244
- EP-A1- 2 042 431
- EP-A1- 2 072 974
- WO-A1-03/066436
- WO-A1-2007/039614
- BE-A- 507 045
- DE-B- 1 012 250
- GB-A- 2 440 443
- US-A- 1 467 802
- US-A- 2 257 412
- US-A- 3 261 508
- US-B1- 6 987 228

## Beschreibung

Die Erfindung betrifft ein Dosiersystem mit einer Dosiereinheit und einer Dosiervorrichtung mit einer Aufnahmevorrichtung die in einer vorbestimmten Bewegungsrichtung bewegbar gelagert ist und eine auf diese Dosiervorrichtung abgestimmte, in die Aufnahmevorrichtung einsetzbare Dosiereinheit.

Dosiervorrichtungen für fliessfähige Substanzen, beispielsweise für Pulver, Pasten oder Flüssigkeiten werden in vielen Bereichen der Industrie eingesetzt. Vorzugsweise weisen diese Dosiervorrichtungen eine Antriebsvorrichtung, eine Steuerung und eine Messvorrichtung zur Erfassung der ausdosierten Masse auf. Die Zuführung von fliessfähigen Substanzen beziehungsweise dem Dosiergut, kann entweder durch eine Versorgungsleitung oder durch eine auswechselbare Dosiereinheit erfolgen. Damit die Dosiereinheit in die Dosiervorrichtung eingesetzt werden kann, muss diese eine Aufnahmevorrichtung aufweisen.

Eine Dosiereinheit weist im Wesentlichen ein Entnahmegefäss auf, welches das Dosiergut enthält und welches mit einem Dosierkopf verschlossen ist. Der Dosierkopf beinhaltet eine Auslassöffnung und ein Verschlusselement, mittels welchem die Auslassöffnung variabel verschliessbar ist. An Stelle des Entnahmegefässes kann der Dosierkopf auch mit einer Zufuhrvorrichtung versehen sein, beispielsweise mit einem Zufuhrschlauch.

Eine Dosiervorrichtung mit einer Aufnahmevorrichtung für eine Dosiereinheit der vorgenannten Art wird in der EP 1 959 244 A1 offenbart. Diese weist eine Aufnahmevorrichtung für eine Dosiereinheit auf, welche um eine horizontale Achse schwenkbar gelagert ist. Mittels eines Schlagmechanismus können oszillierende Schwenkbewegungen der Aufnahmevorrichtung erzeugt werden, wobei durch die Schwenkbewegungen pulverförmiges Dosiergut in der Dosiereinheit aufgelockert wird. Ferner werden durch die Schwenkbewegungen Pulverbrücken eingerissen, die den Zustrom von Dosiergut zur Auslassöffnung hin hemmen. Bei Pulverbrücken verkeilen sich die einzelnen Pulverpartikel gegenseitig zu einem bogenförmigen Deckel und stoppen so den kontinuierlichen Zufluss von Dosiergut zur Auslassöffnung.

Bei pulverförmigem Dosiergut mit beliebigen Kornformen und geringer Feuchte haben oszillierende Schwenkbewegung hervorragende Ergebnisse erbracht. Das in der Dosiereinheit verfüllte Dosiergut, welches durch eine lange Lagerungszeit, Transporterschütterungen oder durch Feuchtigkeitsaufnahme verfestigt worden ist, kann durch die Schwenkbewegungen in einen deutlich fliessfähigeren Zustand gebracht werden. Dies deshalb, weil durch die Schwenkbewegungen das Dosiergut im Entnahmegefäss aufgeworfen wird und eine lockere Aufschüttung des Dosierguts entsteht. Die EP 2 042 431 A1 offenbart den Oberbegriff des Anspruchs 1.

Versuche haben jedoch gezeigt, dass trotz der Auflockerung des Dosiergutes das Dosiergut an der Innenwand des Dosierkopfs anhaftet, insbesondere im Bereich der Austragungsöffnung. Dies kann zur Behinderung des Austragungsvorganges führen. Die Aufgabe der vorliegenden Erfindung ist daher, eine Dosiersystem zu schaffen, bei welcher möglichst wenig Dosiergut an der Innenwand des Dosierkopfs anhaftet. Diese Aufgabe wird mit einem Dosiersystem mit einer Dosiereinheit und einer Dosiervorrichtung gelöst, welche die in den unabhängigen Patentansprüchen angegebenen Merkmale aufweisen.

Eine erfindungsgemässe Dosiereinheit weist einen Innenraum auf, welcher durch eine Seitenwand und einen Boden begrenzt ist. Im Boden ist ferner eine Auslassöffnung ausgebildet. Die Dosiereinheit kann mit einer Aufnahmevorrichtung einer Dosiervorrichtung verbunden werden. Die Aufnahmevorrichtung ist in einer vorbestimmten Bewegungsrichtung bewegbar gelagert. Die Mittellängsachse der Auslassöffnung ist in einem vorgegebenen Winkel zur vorbestimmten Bewegungsrichtung ausgerichtet. Die dem Innenraum zugewandte Innenfläche des Bodens weist einen, von der Auslassöffnung ausgehenden, zumindest linienförmigen Bereich auf, der sich entlang der vorbestimmten Bewegungsrichtung erstreckt.

Die erfindungsgemässe Ausbildung des Bodens in Abhängigkeit der Bewegungsrichtung führt dazu, dass bei Bewegungen der Aufnahmevorrichtung maximale Scherkräfte im zumindest linienförmigen Bereich zwischen der Innenwand und dem an dieser anhaftendem Dosiergut erreichbar sind. Da ferner die Mittellängsachse der Auslassöffnung in einem vorgegebenen Winkel zur Bewegungsrichtung ausgerichtet ist, rutscht das Dosiergut, durch die Scherkräfte von der Innenwand abgelöst, effizient durch die Auslassöffnung aus der Dosiereinheit. Der vorgegebene Winkel zwischen dem linienförmigen Bereich und der Mittellängsachse gemessen, ist kleiner als 90°.

In einer ersten Ausgestaltung der erfindungsgemässen Dosiervorrichtung kann die vorbestimmte Bewegungsrichtung eine um eine horizontale Schwenkachse erfolgende Schwenkbewegung der Aufnahmevorrichtung sein. Dadurch muss der zumindest linienförmige Bereich der Innenwand ein Kreisbogen sein, der sich von der Mittellängsachse der Auslassöffnung ausgehend zur Seitenwand hin erstreckt. Der Kreismittelpunkt des Kreisbogens ist in orthogonalem Abstand zur Mittellängsachse der Auslassöffnung angeordnet und derart ausgerichtet, dass bei mit der Aufnahmevorrichtung verbundener Dosiereinheit der Kreismittelpunkt auf der Schwenkachse der Aufnahmevorrichtung angeordnet ist. Konkret kann dies dadurch erreicht werden, dass die Aufnahmevorrichtung Kupplungsmittel für mindestens eine Dosiereinheit aufweist, wobei durch die Kupplungsmittel sichergestellt wird, dass die Abstände der eingesetzten Dosiereinheit zur Schwenkachse in erfindungsgemässem Sinne eingestellt und/oder eingehalten werden können. Noch einfacher ist die Verwendung eines fest definierten Kupplungsmittels, auf welches die geometrischen Verhältnisse der Dosiereinheit ausgerichtet sind.

Die Grösse des Krümmungsradius des Kreisbogens entspricht somit dem Radius der Schwenkbewegung. Dadurch, dass die Schwenkachse im Abstand von der Mittellängsachse angeordnet ist, erfolgt die Bewegungsrichtung in einem vorgegebenen Winkel zur Mittellängsachse der Auslassöffnung. Aufgrund des Kreisbogens variiert logischerweise der vorgegebene Winkel in Abhängigkeit der Entfernung des betrachteten Tangentenpunkts des Kreisbogens von der Mittellängsachse der Auslassöffnung. Je weiter entfernt der betrachtete Tangentenpunkt von der Auslassöffnung gewählt ist, desto spitzer ist der vorgegebene Winkel.

Die erfindungsgemässe Ausbildung des Bodens gemäss der ersten Ausgestaltung führt dazu, dass bei Schwenkbewegungen der Aufnahmevorrichtung im Bereich des Kreisbogens maximale Scherkräfte zwischen der Innenwand und dem an dieser anhaftendem Dosiergut erreichbar sind. Versuche mit mehreren Dosiergütern mit unterschiedlichsten Eigenschaften haben ergeben, dass durch die erfindungsgemässe Ausbildung der Innenfläche das Dosiergut durch die oszillierenden Schwenkbewegungen effizient von der Innenfläche ablöst und zur Auslassöffnung förderbar ist.

Selbstverständlich kann der Krümmungsradius des Kreisbogens etwas vom Radius der Schwenkbewegungen abweichen. Eine gute Ablösung koagulierender Dosiergüter wurde auch erreicht, wenn die Grösse des Krümmungsradius nicht mehr als ± 10% vom Radius der Schwenkbewegung abweicht.

In einer zweiten Ausführung ist die vorbestimmte Bewegungsrichtung eine Linearbewegung der Aufnahmevorrichtung. Erfindungsgemäss ist der zumindest linienförmige Bereich eine Gerade, die sich von der Mittellängsachse der Auslassöffnung ausgehend zur Seitenwand hin erstreckt.

Ausgehend vom linienförmigen Bereich beider Ausführungen kann der Boden einen kontinuierlichen Flächenverlauf aufweisen. Um einen kontinuierlichen Flächenverlauf zu erreichen, kann die Innenwand beispielsweise bezogen auf die Auslassöffnung rotationssymmetrisch ausgebildet sein, wodurch eine trichterförmige, gewölbte oder kegelförmige Innenwand vorhanden ist.

In Abhängigkeit der gewünschten Eigenschaften des Erfindungsgegenstandes kann der Boden ausgehend vom linienförmigen Bereich auch einen diskontinuierlichen Flächenverlauf aufweisen. Dadurch wird erreicht, dass in der Zone des linienförmigen Bereichs die grössten Scherkräfte entstehen und das Dosiergut in diese Zone zur Auslassöffnung gefördert wird.

Selbstverständlich können im Boden einer Dosiereinheit mindestens zwei Auslassöffnungen ausgebildet sein, wobei der Boden von jeder Auslassöffnung ausgehend einen Kreisbogen aufweist und die Auslassöffnungen auf einer zur Schwenkachse parallelen Linie angeordnet sind.

Vorzugsweise weist die Auslassöffnung eine schneidenförmige Kante auf. Insbesondere bei strangförmig austretenden Substanzen führt die schneidenförmige Kante zu einer besseren Abtrennung des Substanzstranges, da dieser infolge der Schwenkbewegungen und durch seine Massenträgheit von der Kante zerstückelt wird.

Die Auslassöffnung kann ferner einen beliebigen Querschnitt aufweisen, vorzugsweise ist er dreieckig, viereckig oder rund.

In der erfindungsgemässen Dosiereinheit können ferner verschiedene Verschlussorgane verwendet werden. Beispielsweise kann die Querschnittfläche der Auslassöffnung mit einem Schieber variabel verschlossen beziehungsweise geöffnet werden. Auch der Schieber kann eine Schneidkante aufweisen, die zu einer besseren Abtrennung des Substanzstranges führt, da dieser infolge der Schwenkbewegungen und durch seine Massenträgheit von der Schneidkante zerstückelt wird.

Vorzugsweise ist der Schieber orthogonal zur Mittellängsachse der Auslassöffnung verschiebbar angeordnet und weist eine gerade, sichelförmige oder V-förmige Verschlusskante oder eine dreieckige, viereckige oder runde Durchlassöffnung auf.

Anstelle eines Schiebers kann die Querschnittfläche der Auslassöffnung auch mit einem entlang der Mittellängsachse der Auslassöffnung linear verschiebbaren Verschlusselement variabel verschlossen beziehungsweise geöffnet werden.

Damit eine Dosiereinheit mit der den Bewegungen erfindungsgemäss angepassten Innenkontur einsetzbar ist, muss eine Dosiervorrichtung mit einer entsprechend bewegbar ausgestalteten Aufnahmevorrichtung zur Aufnahme einer Dosiereinheit vorhanden sein. Wie weiter oben aufgeführt, kann die Aufnahmevorrichtung je nach Innenkontur der Dosiereinheit schwenkbar oder linear bewegbar ausgestaltet sein.

Ferner weist die Dosiervorrichtung einen Schlagmechanismus zur Erzeugung oszillierender Bewegungen der Aufnahmevorrichtung in der vorgegebenen Bewegungsrichtung auf. Die rasche Abfolge von sehr kurzen Bewegungen führt zu einer Ablösung des Dosiergutes im Grenzbereich zur Innenwand des Dosierkopfes und verhindert das Wiederanhaften der Dosiergutpartikel. Je nach Ausgestaltung des Schlagmechanismus und der bewegbar gelagerten Aufnahmevorrichtung sind die Amplituden der oszillierenden Bewegungen so klein, dass diese eher Schockwellen gleichen. Selbstverständlich kann die Oberfläche des Bodens zur Auslassöffnung hin mit speziellen Mitteln zur Förderung des Dosiergutes ausgestaltet sein. Diese Mittel können eine fischschuppenartige Strukturierung, Rillen mit Sägezahnprofil, sich in eine bestimmte Bewegungsrichtung aufrichtende Fasern, Antihaftbeschichtungen und dergleichen mehr sein.

Die Aufnahmevorrichtung kann ferner um eine horizontale Drehachse drehbar sein. Durch diese Ausgestaltung kann eine Dosiereinheit über Kopf gedreht werden. Dies hat den Vorteil, dass die Aufnahmevorrichtung in eine definierte Beschickungsposition gedreht werden kann, in der eine Dosiereinheit auf einfache Weise in die Aufnahmevorrichtung einsetzbar ist. Zudem kann das Dosiergut durch die Drehbewegung durchmischt und aufgelockert werden. Sobald der Dosiervorgang abgeschlossen ist, führt die Drehbewegung in die Beschickungsposition dazu, dass alles Dosiergut in das Entnahmegefäss zurückfällt. Die Bedienungsperson oder eine Beschickungsvorrichtung kann die Dosiereinheit anschliessend aus der Aufnahmevorrichtung entfernen und in dieser vorgegebenen Lage einlagern. Bei der Einlagerung der Dosiereinheit wird das Dosiergut von der Auslassöffnung ferngehalten. Selbst wenn das Dosiergut zur Koagulation oder Sedimentation neigt, verklumpt die Substanz im Bereich des Entnahmegefäss-Bodens und "zementiert" nicht die Auslassöffnung zu.

Einzelheiten der erfindungsgemässen Dosiervorrichtung ergeben sich anhand der Beschreibung der in den Zeichnungen dargestellten Ausführungsbeispiele. Es zeigen:
- Fig. 1: eine Dosiereinheit in geschnittenem Aufriss, wobei die Dosiereinheit ein Entnahmegefäss und einen Dosierkopf aufweist, sowie eine Schwenkachse einer nicht dargestellten Aufnahmevorrichtung, auf welcher der Kreismittelpunkt eines Kreisbogens angeordnet ist;
- Fig. 2: eine schematische, dreidimensionale Darstellung einer Dosiervorrichtung mit einer Aufnahmevorrichtung, in die eine Dosiereinheit gemäss der Figur 1 eingesetzt ist;
- Fig. 3: eine Dosiereinheit in geschnittenem Aufriss, wobei die Dosiereinheit ein Entnahmegefäss und einen Dosierkopf aufweist, sowie eine mittels Parallellenker linear geführte Aufnahmevorrichtung, zu deren Bewegungsrichtung der linienförmige Bereich des Bodens der Dosiereinheit parallel angeordnet ist;
- Fig. 4: eine schematische, dreidimensionale Darstellung des Dosierkopfs einer Dosiereinheit mit einer Auslassöffnung und mit einem entlang der Mittellängsachse der Auslassöffnung geführten Verschlusselement sowie mit einer kontinuierlichen Innenfläche;
- Fig. 5: eine schematische, dreidimensionale Darstellung des Dosierkopfs einer Dosiereinheit mit einer Auslassöffnung und einer diskontinuierlichen Innenfläche;
- Fig. 6: eine schematische, dreidimensionale Darstellung des Dosierkopfs einer Dosiereinheit mit zwei Auslassöffnungen.

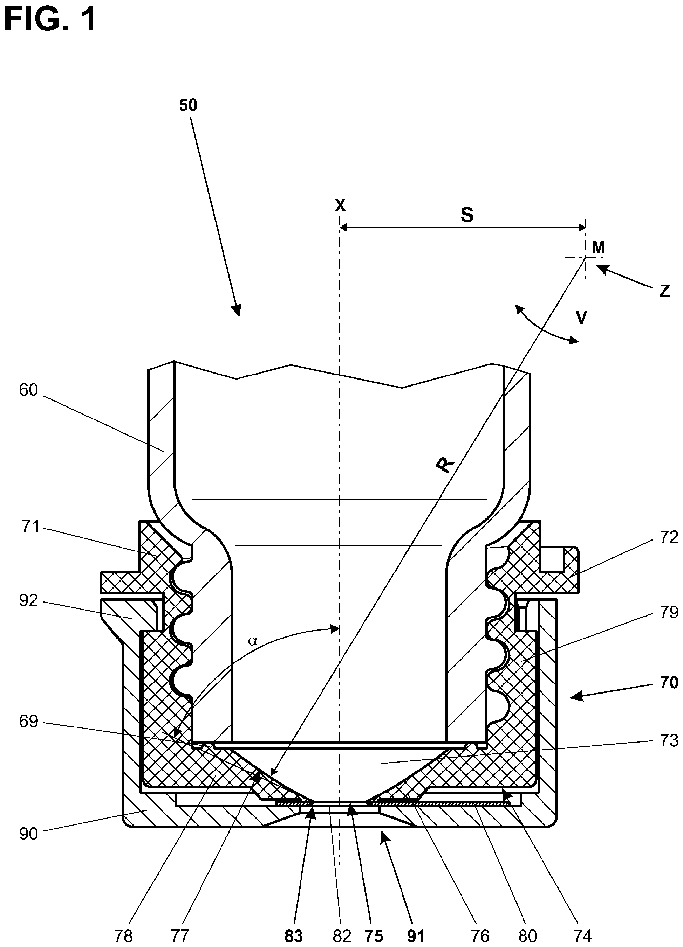

Die Figur 1 zeigt eine Dosiereinheit 50 mit einem Dosierkopf 70 in geschnittenem Aufriss. Die Dosiereinheit 50 ist in ihrer Gebrauchslage dargestellt, das heisst in der Lage, in welcher das Entnahmegefäss 60 mit dem Dosierkopf 70 verbunden ist und Dosiergut ausgetragen werden kann. Wenn Dosiergut aus dem Dosierkopf 70 austreten soll, muss die Dosiereinheit 50 wie dargestellt, kopfüber gedreht sein, so dass der Dosierkopf 70 bezogen auf die Richtung der Schwerkraft unten und das Entnahmegefäss 60 oben ist. Der Dosierkopf 70 weist einen Grundkörper 71 auf, mit dem das Entnahmegefäss 60 lösbar verbunden ist. An Stelle des Entnahmegefässes 60 kann auch ein Verschlussdeckel vorhanden sein, so dass ein verfüllter, einsatzbereiter Dosierkopf 70 gleichzeitig den Vorrat an Dosiergut beinhaltet. Ferner sind auch andere Zuführvorrichtungen mit dem Grundkörper 71 verbindbar, beispielsweise ein Trichter, ein Tank, ein Silo oder ein Zuführschlauch. Der Grundkörper 71 weist ferner ein erstes Mittel 72 zur Übertragung eines Drehmoments auf. Selbstverständlich muss das erste Mittel 72 nicht zwingend den in Figur 1 dargestellten Vorsprung aufweisen um einen Formschluss mit einer nicht dargestellten ersten Einheit zu ermöglichen. Der Grundkörper 71 kann als erstes Mittel 72 auch eine Klemmfläche aufweisen die kraftschlüssig, beispielsweise mit einer Klemmpratze oder Spannzange, mit der ersten Einheit verbunden werden kann. Der Grundkörper 71 wird fast vollständig von einem becherförmigen Stellglied 90 umgeben, welches um seine Mittellängsachse X drehbar mit dem Grundkörper 71 verbunden ist. Das Stellglied 90 weist stirnseitig einen Durchbruch 91 und ein zweites Mittel 92 zur Übertragung eines Drehmoments auf. Zwischen dem Grundkörper 71 und dem Stellglied 90 ist ein Schieber 80 angeordnet, welcher in der offenen Stellung dargestellt ist und eine Durchlassöffnung 82 beinhaltet.

Der Grundkörper 71 weist eine zylindrische Grundform auf. Im Grundkörper 71 ist ein Innenraum 73 ausgebildet, welcher durch einen Boden 78 und eine zylindrische Seitenwand 79 begrenzt wird. Die Seitenwand 79 des Grundkörpers 71 bildet die Anschlussstelle für das Entnahmegefäss 60. Auf der Mittellängsachse X des Grundkörpers 71 beziehungsweise des Dosierkopfs 50, ist eine Auslassöffnung 75 im Boden 78 angeordnet. Die Auslassöffnung 75 ist mit der Anschlussstelle für das Entnahmegefäss 60 verbunden, so dass im Betriebszustand der Dosiereinheit 50 Dosiergut vom Entnahmegefäss 60 zur Auslassöffnung 75 gelangen kann. Die dem Innenraum 73 des Grundkörpers 71 zugewandte Innenfläche 77 des Bodens 78 ist gewölbt ausgebildet und weist einen linienförmigen Bereich in der Form eines Kreisbogens R auf, dessen Kreismittelpunkt M auf der Schwenkachse Z einer nicht dargestellten Aufnahmevorrichtung angeordnet ist. Die Schwenkachse Z gibt die Bewegungsrichtung V vor. Die Schwenkachse Z ist orthogonal zur Zeichnungsebene und zudem parallel im Abstand S zur Mittellängsachse X des Dosierkopfs angeordnet. Der Kreisbogen R erstreckt sich von der Mittellängsachse X der Auslassöffnung 75 ausgehend zur Seitenwand 79 hin. Dadurch dass die Schwenkachse Z im Abstand S von der Mittellängsachse X angeordnet ist, erfolgt die vorgegebene Bewegungsrichtung V in einem vorgegebenen Winkel α zur Mittellängsachse der Auslassöffnung. Der vorgegebene Winkel α zwischen dem linienförmigen Bereich und der Mittellängsachse X gemessen, ist kleiner als 90°.

Da die Innenfläche 77 des Bodens 78 in Bezug auf die Mittellängsachse X der Auslassöffnung 75 rotationssymmetrisch ausgebildet ist, gilt der vorangehend beschriebene Bezug des Kreismittelpunkts M zur Schwenkachse Z nur für einen linienförmigen Bereich der Innenfläche 77. Dies ist jedoch ausreichend, da das Dosiergut sich ausgehend von diesem linienförmigen Bereich von der Innenfläche 77 ablöst und das daneben anhaftende Dosiergut mitreisst.

Die dem Innenraum 73 abgewandte Stirnfläche 74 des Bodens 78 weist eine, die Auslassöffnung 75 umlaufende Kuppe 76 auf. Der Schieber 80 ist im Wesentlichen ein flaches Teil, welcher parallel zur Stirnfläche 74 in geeigneter Weise am Grundkörper 71 linear geführt ist. Das Stellglied 90 weist ein nicht einsehbares Kurvensegment auf, mittels welchem eine auf das Stellglied 90 übertragene Drehbewegung in eine auf den Schieber 80 wirkende lineare Bewegung umgewandelt wird.

Mittels des linear verschiebbaren Schiebers 80 kann dessen Durchlassöffnung 82 mit der Auslassöffnung 75 variabel in Übereinstimmung gebracht werden, so dass der Durchlassquerschnitt abhängig vom Drehwinkel des Stellgliedes 90 relativ zum Grundkörper 71, frei wählbar ist. Selbstverständlich kann die Durchlassöffnung 82 einen beliebigen Querschnitt aufweisen, beispielsweise eine dreieckige, rechteckige, quadratische oder ovale Querschnittform. Wie in der US 7,284,574 B2 bereits ausführlich beschrieben, eignet sich die dreieckige Querschnittform besonders, da der Durchlassquerschnitt des Dosierkopfs 70 mittels einer relativen Verschiebung des Schiebers 80 und dessen Durchlassöffnung 82 relativ zur Auslassöffnung 75 bis auf den Durchmesser eines einzelnen Partikels des Dosiergutes angepasst werden kann. Dementsprechend sind nicht nur ein in der Menge variabel einstellbarer Dosiergutstrom aus der Dosiereinheit 50 ausdosierbar, sondern auch einzelne Partikel. Vorzugsweise weist die Durchlassöffnung 82 eine Schneidkante 83 auf, die zu einer besseren Abtrennung des Substanzstranges führt, da dieser infolge der Schwenkbewegungen und durch seine Massenträgheit von der Schneidkante 83 zerstückelt wird.

Die Abmessungen des Stellgliedes 90 sind derart auf die Dicke des Schiebers 80 und die Abmessungen des Grundkörpers 71 abgestimmt, dass der Schieber 80 mit leichter Presskraft gegen die Kuppe 76 gepresst ist. Um eine ausreichende Abdichtung zwischen dem Entnahmegefäss 60 und dem Grundkörper 71 zu erreichen, kann im Innenraum 73 ein Dichtring 69 ausgebildet oder eingesetzt sein.

In den Figuren 1 und 4 bis 6 ist der Kreisbogen R mittels eines Pfeils dargestellt, dessen Spitze auf den eigentlichen Kreisbogen R weist. Diese Darstellungsart wurde gewählt, um die Verbindung zwischen dem Kreismittelpunkt M, welcher auf der Schwenkachse Z angeordnet ist, und dem Kreisbogen R hervorzuheben. Die Länge des mit R bezeichneten Pfeils entspricht somit auch dem Radius des Kreisbogens R.

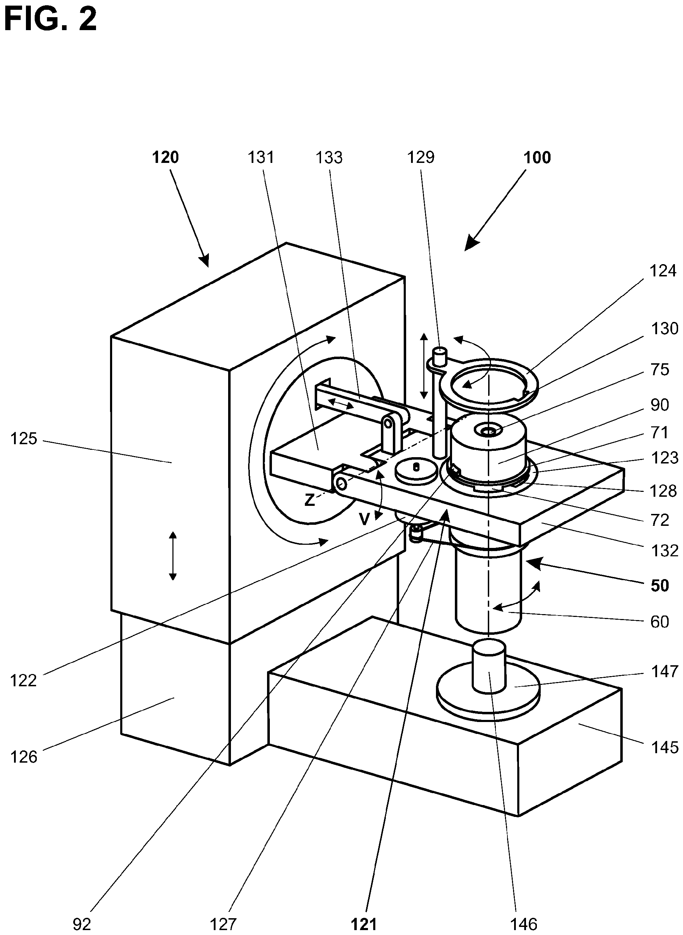

In Figur 2 ist schematisch in dreidimensionaler Ansicht eine Dosiervorrichtung 100 mit einer Dosiereinheit 50 dargestellt, wobei die Dosiervorrichtung 100 eine Aufnahmevorrichtung 121 und eine Antriebsvorrichtung 122 sowie eine Waage 145 mit einer Wägezelle zur Erfassung der ausdosierten Dosiergutmasse aufweist. Die Aufnahmevorrichtung 121 ist in einen Lagerteil 131 und in einen Schwenkteil 132 unterteilt, wobei der Schwenkteil 132 um eine horizontale Schwenkachse Z schwenkbar mit dem Lagerteil 131 verbunden ist. Das Lagerteil 131 ist mit einer Grundeinheit 120 um eine horizontale Drehachse drehbar verbunden. Die in der vorgegebenen Bewegungsrichtung V erfolgenden Schwenkbewegungen werden von einem in der Grundeinheit 120 angeordneten, nicht sichtbaren Antrieb erzeugt und über ein Gestänge 133 auf das Schwenkteil 132 übertragen.

Eine erste Einheit 123 ist drehbar im Schwenkteil 132 gelagert und über einen Riemen 127 mit einem Antriebsrad der Antriebsvorrichtung 122 verbunden, so dass Drehbewegungen übertragen werden können. Die erste Einheit 123 weist eine erste Aussparung 128 auf, die auf die Form des ersten Mittels 72 abgestimmt ist. Wie die Doppelpfeile andeuten, ist eine zweite Einheit 124 entlang eines mit dem Schwenkteil 132 starr verbundenen Führungsstabes 129 linear verschiebbar und um diesen verschwenkbar ausgestaltet. Ferner ist die zweite Einheit 124 auch am Führungsstab 129 fixierbar. Die zweite Einheit 124 weist eine zweite Aussparung 130 auf, die auf die Form des zweiten Mittels 92 abgestimmt ist.

Figur 2 zeigt die Dosiervorrichtung 100 nicht in betriebsbereitem Zustand, sondern in der Einrichtungsphase. In der Einrichtungsphase wird die Dosiereinheit 50 in die in der dargestellten Beschickungsposition verweilenden Aufnahmevorrichtung 121 beziehungsweise in eine Bohrung der ersten Einheit 123 eingesetzt. Zur Erstellung der vollständigen Betriebsbereitschaft der Dosiervorrichtung 100 wird hernach die ringförmig ausgebildete zweite Einheit 124 mittels Verschwenken zur Dosiereinheit 50 ausgerichtet und dem Führungsstab 129 entlang linear verschoben, bis das Stellglied 90 durch die zweite Einheit 124 hindurchreicht und diese auf dem zweiten Mittel 92 lose aufliegt. Nun kann die zweite Einheit 124 solange gedreht werden, bis das erste Mittel 72 in der ersten Aussparung 128 und das zweite Mittel 92 in der zweiten Aussparung 130 ruht. Anschliessend wird die zweite Einheit 124 am Führungsstab 129 fixiert und die Aufnahmevorrichtung 121 mitsamt der Dosiereinheit 50 um eine horizontale Drehachse gedreht, so dass die Auslassöffnung 75 unmittelbar über der Einlassöffnung eines Zielgefässes 146 angeordnet ist. Das Zielgefäss 146 steht auf einem Lastaufnehmer 147 der Waage 145. Selbstverständlich kann zur Auflockerung des Dosiergutes die Aufnahmevorrichtung 121 vor dem Dosieren beliebig oft gedreht oder durch Verschwenken schockartig geschüttelt werden. Wie aus der Figur 2 klar ersichtlich ist, wird zum öffnen und schliessen der Dosiereinheit 50 nicht das Stellglied 90 relativ zur Aufnahmevorrichtung 121 gedreht, sondern der Grundkörper 71 mit dem Entnahmegefäss 60.

Um nach dem Dosiervorgang die Dosiereinheit 50 aus der Aufnahmevorrichtung 121 zu entfernen, werden die vorangehend beschriebenen Schritte im Wesentlichen in umgekehrter Reihenfolge durchgeführt.

Damit Zielgefässe 146 mit unterschiedlicher Höhe verwendet werden können, kann die Grundeinheit 120 in ein Unterteil 126 und in ein Oberteil 125 aufgeteilt sein, wobei zur Höhenverstellung das Oberteil 125 zum Unterteil 126 vertikal verschiebbar ist.

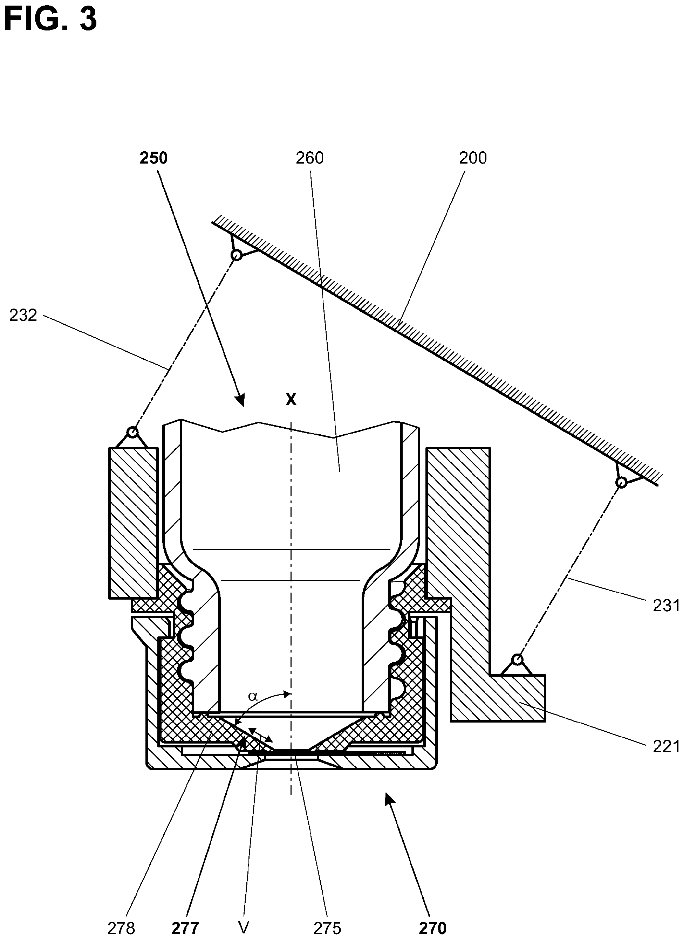

Figur 3 zeigt eine Dosiereinheit 250 in geschnittenem Aufriss, wobei die Dosiereinheit 250 ein Entnahmegefäss 260 und einen Dosierkopf 270 aufweist. Der Dosierkopf 270 entspricht in seinem Aufbau genau dem in der Figur 1 dargestellten Dosierkopf. Der einzige Unterschied liegt darin, dass in der Figur 3 die Innenfläche 277 des Bodens 278 kegelförmig und nicht gewölbt ausgebildet ist und somit einen linienförmigen Bereich aufweist, der im Schnitt als Gerade erscheint. Der linienförmige Bereich erstreckt sich parallel zur Bewegungsrichtung V einer mittels Parallellenker 231, 232 linear geführten Aufnahmevorrichtung 221. Die Aufnahmevorrichtung 221 und die Parallellenker 231, 232 sind Teil einer nur teilweise dargestellten Dosiervorrichtung 200. Die beiden Parallellenker 231, 232 sind gleich lang, deshalb erfolgt im Wesentlichen eine lineare Bewegung in der Bewegungsrichtung V und im vorgegebenen Winkel α zur Mittellängsachse X der Auslassöffnung 275. Auch bei diesem Ausführungsbeispiel ist der vorgegebene Winkel α zwischen dem linienförmigen Bereich und der Mittellängsachse gemessen, kleiner 90°.

Selbstverständlich können die beiden Parallellenker 231, 232 auch eine unterschiedliche Länge aufweisen, wodurch die vorbestimmte Bewegungsrichtung V eine Schwenkbewegung beziehungsweise Schaukelbewegung ist und die Innenfläche des Bodens dieser Schwenkbewegung angepasst, gewölbt sein muss.

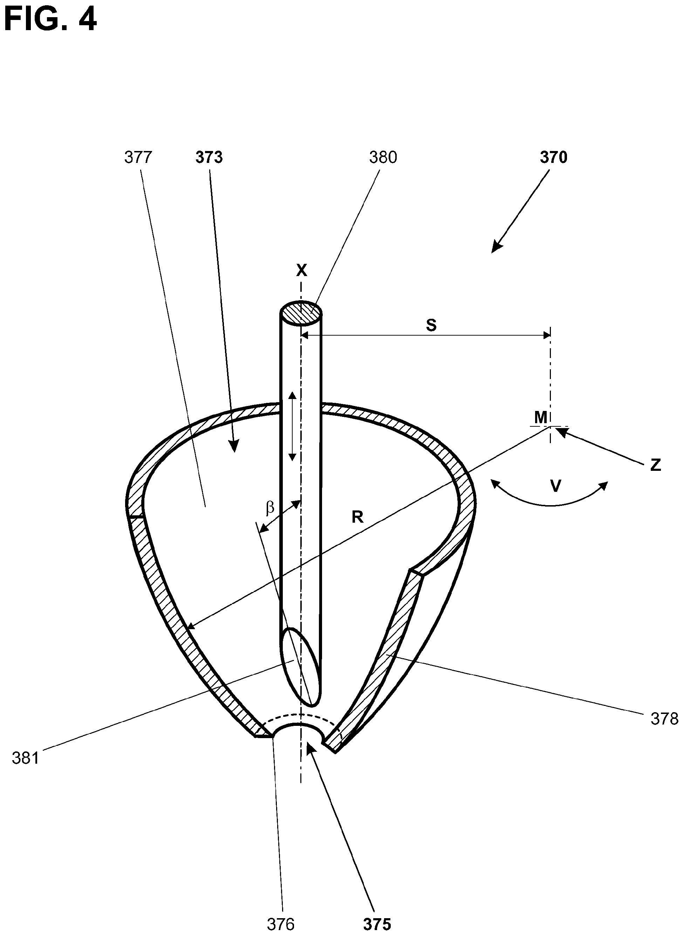

Figur 4 zeigt eine schematische, dreidimensionale Darstellung des Dosierkopfs 370 einer Dosiereinheit mit einer Auslassöffnung 375 in einer weiteren Ausführung. Die Auslassöffnung 375 weist eine schneidenförmige Kante 376 auf. Diese weitere Ausführung entspricht im Wesentlichen der in der Figur 1 bereits beschriebenen Ausgestaltung. In Figur 4 ist deutlich ersichtlich, wie die rotationssymmetrische Innenfläche 377 des Bodens 378 ausgestaltet ist. Der Kreismittelpunkt M des Kreisbogens R ist auf die von der Mittellängsachse X orthogonal und im Abstand S angeordnete Schwenkachse Z ausgerichtet, die die Bewegungsrichtung V vorgibt. Der Kreisbogen R bestimmt die auf die Mittellängsachse X des Dosierkopfs 370 bezogene, rotationssymmetrische Formgebung der Innenfläche 377. Demzufolge weist nur ein linienförmiger Bereich der Innenfläche 377 die erfindungsgemässe Ausrichtung zur Schwenkachse Z auf, obwohl die Innenfläche 377 ausgehend vom Kreisbogen R einen kontinuierlichen Flächenverlauf aufweist.

Im Innenraum 373 des Dosierkopfs 370 ist auf dessen Mittellängsachse X ein Verschlusselement 380 angeordnet. Durch lineare Verschiebung des Verschlusselementes 380 entlang der Mittellängsachse X kann die Auslassöffnung 375 variabel verschlossen werden. Die Endfläche 381 des Verschlusselementes 380 ist zu diesem Zweck unter einem Winkel β zur Mittellängsachse X angeordnet. Selbstverständlich kann die Endfläche 381 des Verschlusselements 380 oder das Verschlusselement 380 selbst auch anders ausgestaltet sein. Mögliche Ausgestaltungen sind beispielsweise in der EP 1 931 950 A1, EP 1 931 951 A1 und in der EP 1 931 953 A1 offenbart.

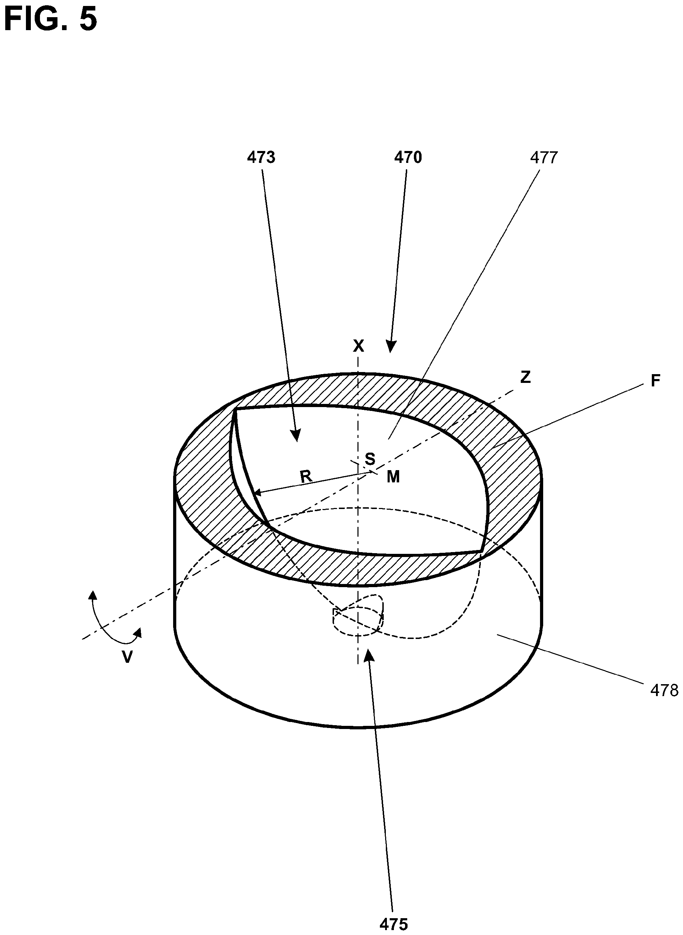

Figur 5 zeigt eine schematische, dreidimensionale Darstellung des Dosierkopfs 470 einer Dosiereinheit mit einer Auslassöffnung 475 in einer weiteren Ausführung. Auf die Darstellung eines Verschlusselements wurde Zwecks einer besseren Übersicht verzichtet. Wie in den vorangehend beschriebenen Ausführungen wird der Innenraum 473 des Dosierkopfs 470 durch eine Seitenwand und einen Boden 478 begrenzt, wobei der Übergang von der Seitenwand zum Boden 478 in der horizontalen Schnittebene F liegt und deshalb die Seitenwand nicht dargestellt ist. Der Kreismittelpunkt M des Kreisbogens R ist auf die von der Mittellängsachse X orthogonal und im Abstand S angeordnete Schwenkachse Z ausgerichtet, die die Bewegungsrichtung V vorgibt. Die Innenfläche 477 des Bodens 478 weist einen diskontinuierlichen Flächenverlauf auf, wobei die Stelle der Diskontinuität im Bereich des Kreisbogens R liegt.

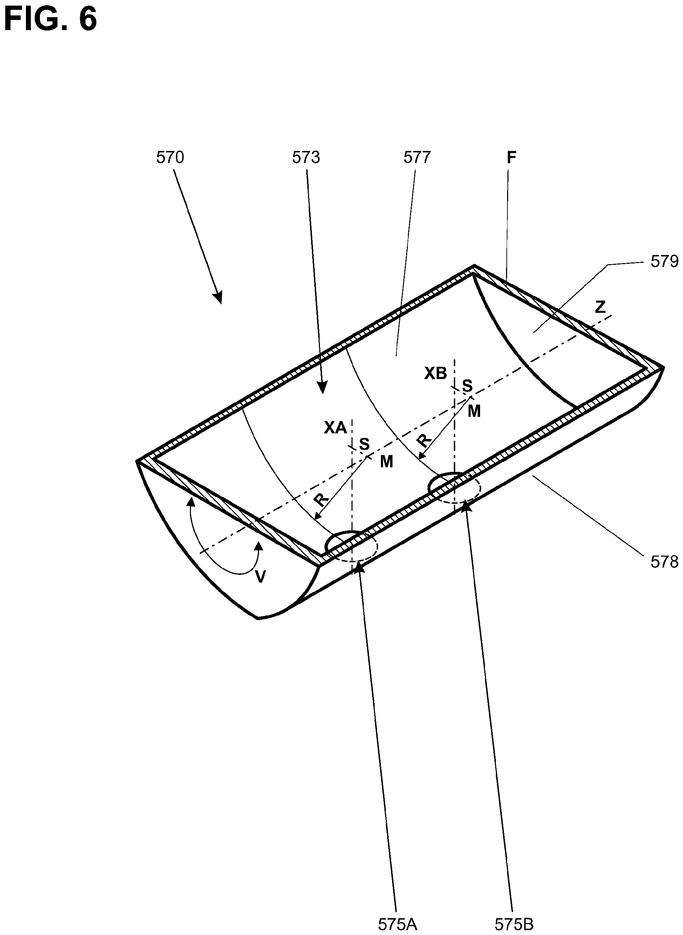

Figur 6 zeigt eine schematische, dreidimensionale Darstellung des Dosierkopfs 570 einer Dosiereinheit mit zwei Auslassöffnungen 575A, 575B in einer weiteren Ausführung. Auf die Darstellung von Verschlusselementen wurde Zwecks einer besseren Übersicht verzichtet. Wie in den vorangehend beschriebenen Ausführungen wird der Innenraum 573 des Dosierkopfs 570 durch eine Seitenwand 579 und einen Boden 578 begrenzt, wobei der Übergang von der Seitenwand 579 zum Boden 478 teilweise in der horizontalen Schnittebene F liegt. Die horizontale Schwenkachse Z ist ebenfalls in der Schnittebene F angeordnet. Anders als bei den vorhergehenden Beispielen ist die Innenfläche 577 des Bodens 578 rinnenförmig ausgebildet, so dass nicht nur ein Kreismittelpunkt M vorhanden ist, sondern sich dieser über die gesamte Länge der Schwenkachse Z hin erstreckt. Dem entsprechend ist jeder Punkt der Innenfläche 577 erfindungsgemäss auf einem Kreisbogen R angeordnet, dessen Kreismittelpunkt M auf der Schwenkachse Z angeordnet ist. Wie aus der Figur 6 ersichtlich ist, sind die Mittellängsachsen XA, XB der Auslassöffnungen 575A, 575B je im gleichen Abstand S zur Schwenkachse Z angeordnet, welche die Bewegungsrichtung V vorgibt. Ferner können auch mehr als zwei Auslassöffnungen 575A, 575B vorhanden sein, welche unabhängig voneinander oder synchron mit Verschlusselementen verschliessbar sind.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. So kann die in der Figur 5 offenbarte diskontinuierliche Innenfläche auch in einem Dosierkopf mit mehreren Auslassöffnungen, wie dies in Figur 6 offenbart ist, verwendet werden. Ferner sind die Verschlusselemente wie beispielsweise der Schieber aus Figur 1 und das Verschlusselement aus Figur 4 in allen Ausführungsbeispielen einsetzbar. Dementsprechend werden solche Kombinationen und Alternativen als Teil der Erfindung betrachtet.

### Bezugszeichenliste

- 250, 50: Dosiereinheit
- 260, 60: Entnahmegefäss
- 69: Dichtring
- 570, 470, 370, 270, 70: Dosierkopf
- 71: Grundkörper
- 72: erste Mittel
- 573, 473, 373, 73: Innenraum
- 74: Stirnfläche
- 575A, 575B, 475, 375, 275, 75: Auslassöffnung
- 76: Kuppe
- 577, 477, 377, 277, 77: Innenfläche
- 578, 478, 378, 278, 78: Boden
- 579, 279, 79: Seitenwand
- 80: Schieber
- 82: Durchlassöffnung
- 83: Schneidkante
- 90: Stellglied
- 91: Durchbruch
- 92: zweites Mittel
- 200, 100: Dosiervorrichtung
- 120: Grundeinheit
- 221, 121: Aufnahmevorrichtung
- 122: Antriebsvorrichtung
- 123: erste Einheit
- 124: zweite Einheit
- 125: Oberteil
- 126: Unterteil
- 127: Riemen
- 128: erste Aussparung
- 129: Führungsstab
- 130: zweite Aussparung
- 131: Lagerteil
- 132: Schwenkteil
- 133: Gestänge
- 145: Waage
- 146: Zielgefäss
- 147: Lastaufnehmer
- 232, 231: Parallellenker
- 376: schneidenförmige Kante
- 380: Verschlusselement
- 381: Endfläche
- F: Schnittebene
- M: Kreismittelpunkt
- R: Kreisbogen
- S: Abstand
- V: Bewegungsrichtung
- XB, XA, X: Mittellängsachse
- Z: Schwenkachse

## Patentansprüche

1. Dosiersystem mit einer Dosiereinheit (50, 250) und einer Dosiervorrichtung (100, 200), wobei die Dosiervorrichtung (100, 200) eine Aufnahmevorrichtung (121, 221) zur Aufnahme der Dosiereinheit (50, 250) umfasst, und wobei die Dosiereinheit (50, 250) einen Innenraum (73, 373, 473, 573), welcher durch eine Seitenwand (79, 279, 579) und einen Boden (78, 278, 378, 478, 578) begrenzt ist, sowie eine im Boden (78, 278, 378, 478, 578) ausgebildeten Auslassöffnung (75, 275, 375, 475, 575A, 575B) aufweist, wobei die Dosiereinheit (50, 250) mit der Aufnahmevorrichtung (121, 221) der Dosiervorrichtung (100, 200) verbindbar ist und die Aufnahmevorrichtung (121, 221) in einer vorbestimmten Bewegungsrichtung (V) bewegbar gelagert ist und die dem Innenraum (73, 373, 473, 573) zugewandte Innenfläche des Bodens (78, 278, 378, 478, 578) einen von der Auslassöffnung (75, 275, 375, 475, 575A, 575B) ausgehenden, zumindest linienförmigen Bereich aufweist, welcher linienförmige Bereich sich von der Mittellängsachse (X) der Auslassöffnung (75, 275, 375, 475, 575A, 575B) ausgehend zur Seitenwand (79, 279, 579) hin erstreckt, wobei ein vorgegebene Winkel (α) zwischen dem linienförmigen Bereich und der Mittellängsachse (X) gemessen, kleiner 90° ist, **dadurch gekennzeichnet, dass** die vorbestimmte Bewegungsrichtung (V) in dem vorgegebenen Winkel (α) zur Mittellängsachse (X) der Auslassöffnung (75, 275, 375, 475, 575A, 575B) und entlang dem zumindest linienförmigen Bereich der dem Innenraum (73, 373, 473, 573) zugewandten Innenfläche des Bodens (78, 278, 378, 478, 578) erfolgt..

2. Dosiersystem nach Anspruch 1, **dadurch gekennzeichnet, dass** die Dosiervorrichtung (100, 200) einen Schlagmechanismus (133) zur Erzeugung oszillierender Bewegungen der Aufnahmevorrichtung (121, 221) in der vorgegebenen Bewegungsrichtung (V) aufweist.

3. Dosiersystem nach Anspruch 1 oder 2, **dadurch gekennzeichnet, dass** die Aufnahmevorrichtung (121, 221) ferner um eine horizontal angeordnete Drehachse drehbar ist.

4. Dosiersystem nach einem der vorhergehenden Ansprüche **dadurch gekennzeichnet, dass** die vorbestimmte Bewegungsrichtung (V) eine um eine horizontale Schwenkachse (Z) erfolgende Schwenkbewegung der Aufnahmevorrichtung (121, 221) ist und der zumindest linienförmige Bereich ein Kreisbogen (R) ist, der sich von der Mittellängsachse (X) der Auslassöffnung (75, 275, 375, 475, 575A, 575B) ausgehend zur Seitenwand (79, 279, 579) hin erstreckt, wobei der Kreismittelpunkt (M) des Kreisbogens (R) in orthogonalem Abstand (S) zur Mittellängsachse (X) der Auslassöffnung (75, 275, 375, 475, 575A, 575B) angeordnet und derart ausgerichtet ist, dass bei mit der Aufnahmevorrichtung (121, 221) verbundener Dosiereinheit (50, 250) der Kreismittelpunkt (M) auf der Schwenkachse (Z) der Aufnahmevorrichtung (121, 221) angeordnet ist.

5. Dosiersystem nach Anspruch 4, **dadurch gekennzeichnet, dass** der Kreisbogen (R) einen Krümmungsradius aufweist, dessen Grösse nicht mehr als ± 10% vom Radius der Schwenkbewegung im Bereich des Kreisbogens (R) abweicht.

6. Dosiersystem nach Anspruch 5, **dadurch gekennzeichnet, dass** die vorbestimmte Bewegungsrichtung (V) eine Linearbewegung der Aufnahmevorrichtung (121, 221) ist und der zumindest linienförmige Bereich eine zur vorbestimmten Bewegungsrichtung (V) parallelen Gerade ist, die sich von der Mittellängsachse (X) der Auslassöffnung (75, 275, 375, 475, 575A, 575B) ausgehend zur Seitenwand (79, 279, 579) hin erstreckt.

7. Dosiersystem nach einem vorhergehenden Ansprüche, **dadurch gekennzeichnet, dass** ausgehend vom zumindest linienförmigen Bereich der Boden (78, 278, 378, 578) der Dosiereinheit (50, 250) einen kontinuierlichen Flächenverlauf aufweist.

8. Dosiersystem nach einem der Ansprüche 1 bis 6, **dadurch gekennzeichnet, dass** ausgehend vom zumindest linienförmigen Bereich der Boden (478) der Dosiereinheit (50, 250) einen diskontinuierlichen Flächenverlauf aufweist.

9. Dosiersystem nach einem der Ansprüche 1 bis 7, **dadurch gekennzeichnet, dass** mindestens zwei Auslassöffnungen (75, 275, 375, 475, 575A, 575B) im Boden (78, 278, 378, 478, 578) ausgebildet sind, wobei der Boden (78, 278, 378, 478, 578) von jeder Auslassöffnung (75, 275, 375, 475, 575A, 575B) ausgehend einen zumindest linienförmigen Bereich aufweist die sich entlang der vorbestimmten Bewegungsrichtung (V) erstrecken.

10. Dosiersystem nach einem der Ansprüche 1 bis 9, **dadurch gekennzeichnet, dass** die Auslassöffnung (75, 275, 375, 475, 575A, 575B) eine schneidenförmige Kante (376) aufweist.

11. Dosiersystem nach einem der Ansprüche 1 bis 10, **dadurch gekennzeichnet, dass** die Querschnittfläche der Auslassöffnung (75, 275, 375, 475, 575A, 575B) mit einem Schieber (80) variabel verschliessbar ist.

12. Dosiersystem nach Anspruch 11, **dadurch gekennzeichnet, dass** der Schieber (80) orthogonal zur Mittellängsachse (X) der Auslassöffnung (75, 275, 375, 475, 575A, 575B) verschiebbar angeordnet ist und eine gerade, sichelförmige oder V-förmige Verschlusskante oder eine dreieckige, viereckige oder runde Durchlassöffnung (82) aufweist.

13. Dosiersystem nach Anspruch 12, **dadurch gekennzeichnet, dass** die Durchlassöffnung (82) eine Schneidkante (83) aufweist.

14. Dosiersystem nach einem der Ansprüche 1 bis 10, **dadurch gekennzeichnet, dass** die Querschnittfläche der Auslassöffnung (75, 275, 375, 475, 575A, 575B) mit einem entlang der Mittellängsachse (X) der Auslassöffnung (75, 275, 375, 475, 575A, 575B) linear verschiebbaren Verschlusselement (380) variabel verschliessbar ist.

## Claims

1. A dosing system having a dosage-dispensing unit (50, 250) and a dosage-dispensing device (100, 200), wherein the dosage-dispensing device (100, 200) comprises a holder device (121, 221) for holding the dosage-dispensing unit (50, 250), and wherein the dosage-dispensing unit (50, 250) comprises an interior space (73, 373, 473, 573) that is delimited by a sidewall (79, 279, 579) and a bottom portion (78, 278, 378, 478, 578), and further comprises an outlet orifice (75, 275, 375, 475, 575A, 575B) that is formed in the bottom portion (78, 278, 378, 478, 578), wherein the dosage-dispensing unit (50, 250) can be connected to the holder device (121, 221) of the dosage-dispensing device (100, 200) and the holder device (121, 221) is supported so as to be movable in a prescribed direction of movement (V), and the internal surface of the bottom portion (78, 278, 378, 478, 578) facing towards the interior space (73, 373, 473, 573) includes an at least linear surface domain that starts at the outlet orifice (75, 275, 375, 475, 575A, 575B), which linear surface domain extends from the central lengthwise axis (X) of the outlet orifice (75, 275, 375, 475, 575A, 575B) up to the sidewall (79, 279, 579), wherein a predetermined angle (*α*) as measured between the linear surface domain and the central lengthwise axis (X) is smaller than 90°, **characterized in that** the prescribed direction of movement (V) occurs at a predetermined angle (*α*) relative to the central longitudinal axis (X) of the outlet orifice (75, 275, 375, 475, 575A, 575B) and along the at least linear surface domain of the internal surface of the bottom portion (78, 278, 378, 478, 578) facing towards the interior space (73, 373, 473, 573).

2. The dosing system according to claim 1, **characterized in that** the dosage-dispensing device (100, 200) comprises an impact mechanism (133) for generating oscillating movements of the holder device (121, 221) in the prescribed direction of movement (V).

3. The dosing system according to claim 1 or 2, **characterized in that** the holder device (121, 221) is further capable of rotating about a horizontally oriented axis of rotation.

4. The dosing system according to any one of the preceding claims, **characterized in that** the prescribed direction of movement (V) is a pivoting movement of the holder device (121, 221) about a horizontal pivot axis (Z) and that the at least linear surface domain is a circular arc (R) extending from the central longitudinal axis (X) of the outlet orifice (75, 275, 375, 475, 575A, 575B) towards the sidewall (79, 279, 579), wherein the center point (M) of the circular arc (R) lies at a perpendicular distance (S) from the central longitudinal axis (X) of the outlet orifice (75, 275, 375, 475, 575A, 575B) and is aligned in such a way that when the dosage-dispensing unit (50, 250) is connected to the holder device (121, 221), the center point (M) lies on the pivot axis (Z) of the holder device (121, 221).

5. The dosing system according to claim 4, **characterized in that** the circular arc (R) has a radius of curvature that differs by no more than ± 10% from the radius of the pivoting movement in the surface domain of the circular arc (R).

6. The dosing system according to claim 5, **characterized in that** the prescribed direction of movement (V) is a linear movement of the holder device (121, 221) and the at least linear surface domain is a straight line segment parallel to the prescribed direction of movement (V), which extends from the central longitudinal axis (X) of the outlet orifice (75, 275, 375, 475, 575A, 575B) towards the sidewall (79, 279, 579).

7. The dosing system according to any one of the preceding claims, **characterized in that**, starting from the at least linear surface domain, the bottom portion (78, 278, 378, 578) of the dosage-dispensing unit (50, 250) has a continuous surface profile.

8. The dosing system according to any one of claims 1 to 6, **characterized in that**, starting from the at least linear surface domain, the bottom portion (478) of the dosage-dispensing unit (50, 250) has a discontinuous surface profile.

9. The dosing system according to any one of claims 1 to 7, **characterized in that** at least two outlet orifices (75, 275, 375, 475, 575A, 575B) are formed in the bottom portion (78, 278, 378, 478, 578), wherein the bottom portion (78, 278, 378, 478, 578), starting from each of the outlet orifices (75, 275, 375, 475, 575A, 575B), has an at least linear surface domain that extends along the prescribed direction of movement (V).

10. The dosing system according to any one of claims 1 to 9, **characterized in that** the outlet orifice (75, 275, 375, 475, 575A, 575B) has a sharp-edged rim (376).

11. The dosing system according to any one of claims 1 to 10, **characterized in that** the aperture cross-section of the outlet orifice (75, 275, 375, 475, 575A, 575B) can be closed off to a variable extent by a slide shutter (80).

12. The dosing system according to claim 11, **characterized in that** the slide shutter (80) is arranged with the ability to slide orthogonally to the central longitudinal axis (X) of the outlet orifice (75, 275, 375, 475, 575A, 575B) and has a straight, sickle-shaped, or V-shaped shutter edge or a triangular, square, or round passage opening (82).

13. The dosing system according to claim 12, **characterized in that** the passage opening (82) has a cutting edge (83).

14. The dosing system according to any one of claims 1 to 10, **characterized in that** the aperture cross-section of the outlet orifice (75, 275, 375, 475, 575A, 575B) can be closed to a variable degree by a closure element (380) that is displaceable in a linear movement along the central longitudinal axis (X) of the outlet orifice (75, 275, 375, 475, 575A, 575B).

## Revendications

1. Système de dosage comprenant une unité de dosage (50, 250) et un dispositif de dosage (100, 200), dans lequel le dispositif de dosage (100, 200) comprend un dispositif de réception (121, 221) pour recevoir l'unité de dosage (50, 250), et dans lequel l'unité de dosage (50, 250) comporte un espace intérieur (73, 373, 473, 573), qui est délimité par une paroi latérale (79, 279, 579) et une base (78, 278, 378, 478, 578), ainsi qu'une ouverture de sortie (75, 275, 375, 475, 575A, 575B) formée dans la base (78, 278, 378, 478, 578), dans lequel l'unité de dosage (50, 250) peut être connectée au dispositif de réception (121, 221) du dispositif de dosage (100, 200) et le dispositif de réception (121, 221) est monté de manière mobile dans une direction de mouvement prédéterminée (V) et la surface intérieure de la base (78, 278, 378, 478, 578) tournée vers l'espace intérieur (73, 373, 473, 573) comporte une zone partant de l'ouverture de sortie (75, 275, 375, 475, 575A, 575B), au moins linéaire, laquelle zone linéaire s'étend de l'axe longitudinal central (X) de l'ouverture de sortie (75, 275, 375, 475, 575A, 575B) jusqu'à la paroi latérale (79, 279, 579), dans lequel un angle prédéterminé mesuré entre la zone linéaire et l'axe longitudinal central (X), est inférieur à 90°, **caractérisé en ce que** la direction de mouvement prédéterminée (V) se trouve à l'angle prédéterminé par rapport à l'axe longitudinal central (X) de l'ouverture de sortie (75, 275, 375, 475, 575A, 575B) et le long de la zone au moins linéaire de la surface intérieure de la base (78, 278, 378, 478, 578) tournée vers l'espace intérieur (73, 373, 473, 573).

2. Système de dosage selon la revendication 1, **caractérisé en ce que** le dispositif de dosage (100, 200) possède un mécanisme de percussion (133) pour générer des mouvements oscillants du dispositif de réception (121, 221) dans la direction de mouvement prédéterminée (V).

3. Système de dosage selon la revendication 1 ou 2, **caractérisé en ce que** le dispositif de réception (121, 221) peut également tourner autour d'un axe de rotation disposé horizontalement.

4. Système de dosage selon l'une des revendications précédentes, **caractérisé en ce que** la direction de mouvement prédéterminée (V) est un mouvement de pivotement du dispositif de réception (121, 221) autour d'un axe de pivotement horizontal (Z) et la zone au moins linéaire est un arc de cercle (R) qui s'étend depuis l'axe longitudinal central (X) de l'ouverture de sortie (75, 275, 375, 475, 575A, 575B) jusqu'à la paroi latérale (79, 279, 579), dans lequel le centre du cercle (M) de l'arc de cercle (R) est disposé à une distance perpendiculaire (S) à l'axe longitudinal central (X) de l'ouverture de sortie (75, 275, 375, 475, 575A, 575B) et est configuré de manière que lorsque l'unité de dosage (50, 250) est connectée au dispositif de réception (121, 221) le centre du cercle (M) est disposé sur l'axe de pivotement (Z) du dispositif de réception (121, 221).

5. Système de dosage selon la revendication 4, **caractérisé en ce que** l'arc de cercle (R) a un rayon de courbure dont la taille ne diffère pas de plus de ± 10 % du rayon du mouvement de pivotement dans la zone de l'arc de cercle (R).

6. Système de dosage selon la revendication 5, **caractérisé en ce que** la direction de mouvement prédéterminée (V) est un mouvement linéaire du dispositif de réception (121, 221) et la zone au moins linéaire est une ligne droite parallèle à la direction de mouvement prédéterminée (V), qui s'étend depuis l'axe longitudinal central (X) de l'ouverture de sortie (75, 275, 375, 475, 575A, 575B) jusqu'à la paroi latérale (79, 279, 579).

7. Système de dosage selon une revendication précédente, **caractérisé en ce que**, à partir de la zone au moins linéaire, la base (78, 278, 378, 578) de l'unité de dosage (50, 250) a un profil de surface continu.

8. Système de dosage selon l'une des revendications 1 à 6 **caractérisé en ce que**, à partir de la zone au moins linéaire, la base (478) de l'unité de dosage (50, 250) a un profil de surface discontinu.

9. Système de dosage selon l'une des revendications 1 à 7, **caractérisé en ce qu'**au moins deux ouvertures de sortie (75, 275, 375, 475, 575A, 575B) sont formées dans la base (78, 278, 378, 478, 578), dans lequel la base (78, 278, 378, 478, 578) comporte une zone au moins linéaire à partir de chaque ouverture de sortie (75, 275, 375, 475, 575A, 575B) et qui s'étend le long de la direction de mouvement prédéterminée (V).

10. Système de dosage selon l'une des revendications 1 à 9, **caractérisé en ce que** l'ouverture de sortie (75, 275, 375, 475, 575A, 575B) comporte un bord coupant (376).

11. Système de dosage selon l'une des revendications 1 à 10, **caractérisé en ce que** la section transversale de l'ouverture de sortie (75, 275, 375, 475, 575A, 575B) peut être fermée de manière variable avec une guillotine (80).

12. Système de dosage selon la revendication 11, **caractérisé en ce que** la guillotine (80) peut coulisser perpendiculairement à l'axe longitudinal central (X) de l'ouverture de sortie (75, 275, 375, 475, 575A, 575B) et comporte un bord de fermeture droit, en forme de croissant ou en forme de V ou une ouverture triangulaire, carrée ou ronde (82).

13. Système de dosage selon la revendication 12, **caractérisé en ce que** l'ouverture de passage (82) comporte un bord coupant (83).

14. Système de dosage selon l'une des revendications 1 à 10, **caractérisé en ce que** la section transversale de l'ouverture de sortie (75, 275, 375, 475, 575A, 575B) peut être fermée de manière variable au moyen d'un élément de fermeture (380) pouvant coulisser linéairement le long de l'axe longitudinal central (X) de l'ouverture de sortie (75, 275, 375, 475, 575A, 575B).
